# EUROPEAN PATENT SPECIFICATION

(11) **EP 2 435 305 B1**
(45) Date of publication and mention of the grant of the patent: **23.09.2015**
(21) Application number: 09781952.8
(22) Date of filing: 18.08.2009
(51) Int. Cl.: B64C 27/02

(54) **AUTOGYRO PLANE**
TRAGSCHRAUBER
AUTOGIRE

(30) Priority: 29.05.2009 GB 0909161
(43) Date of publication of application: 04.04.2012
(73) Proprietor: BJJR Limited, Derby Derbyshire DE21 7AZ (GB)
(72) Inventor: JONES, Barry, Asbourne Derbyshire DE6 1JJ (GB)
(74) Representative: Jones, John Bryn
(86) International application number: PCT/EP2009/060670
(87) International publication number: WO 2010/136080

(56) References cited:
- CH-A5- 666 664
- US-A- 1 929 512
- US-A- 2 021 470
- US-A- 2 155 881
- US-A- 2 402 957
- US-A- 3 149 802
- US-A- 3 155 341
- US-B1- 7 178 757

## Description

The present invention relates to autogyro planes.

Gyroplanes produce lift via a rotating set of rotor blades. The rotor blades can be powered, as in a helicopter. Under such circumstances the torque reaction from the rotor blades tends to rotate the fuselage in an opposite direction and hence means, such as a tail rotor, or a gas turbine exhaust stream must be provided so as to be able to directionally position the fuselage.

Another type of gyroplane is an autogyro. The rotor blades of an autogyro are not powered during flight. Forward motion is generated by a propeller. The propeller can be a tractor propeller mounted on the front of the fuselage which pulls the aircraft, alternatively the propeller may be a pusher propeller mounted towards the rear of the fuselage which pushes the aircraft.

Because the rotor is unpowered during flight there is no torque reaction and hence a simple rudder is able to control the directional position of the fuselage. Unlike helicopters, autogyros cannot hover in still air, though they can typically fly more slowly than an equivalent sized fixed wing aircraft.

Pilots of autogyro planes with pusher propellers can induce an unstable flying condition causing the pitch attitude of the aircraft to oscillate and this may lead to an irrecoverable "bunt" following which the aircraft's nose pitches downwardly to an irrecoverable position, resulting in the loss of control of the aircraft.

Pilots flying autogyro planes with tractor propellers are far less likely to induce the oscillating pitching motion.

As mentioned above, in flight, the rotor of known autogyro planes is freely rotating. However, in order for the autogyro plane to effect a takeoff it is necessary for the rotor blades to be spun up to a predetermined speed. In simple autogyro planes this has been done by initially manually spinning the rotor blades and then using the propeller to taxi the autogyro plane along the run way until such time as the rotor blades have achieved a take off speed. In more sophisticated autogyro planes the initial rotation can be done via a motor, typically a mechanical or hydraulic "pre-rotator" which spins the blades whilst the vehicle is on the ground. Once the rotor blades achieve a predetermined speed then the pre-rotator is decoupled from the blades so as to allow them to freely rotate and the propeller speed is increased causing the autogyro plane to move forward across the ground. The forward motion of the autogyro plane causes the rotor blades to increase in speed until such time as lift generated by the rotor blades lifts the autogyro plane off the ground. Such a system will typically require less taxi distance to fly, indeed some autogyro planes can "jump" into flight without any taxi distance.

Note that the pre-rotator is decoupled from the rotor blades prior to the autogyro leaving the ground. Note also that whilst the pre-rotator is coupled and driving the rotor blades, the torque reaction generated by the pre-rotator is reacted by the wheels of the autogyro plane engaging the ground.

US7178757 discloses an autogyro with a motorcycle-like configuration for the rider, and includes a tractor propeller mounted at the front of the fuselage and a mast connected to the fuselage for supporting rotor blades. A rudder and horizontal stabiliser are located at the rear of the fuselage, separate from the mast.

Known autogyro planes in which the rotor blades freely rotate in flight have a maximum forward speed. The maximum forwards speed may be dictated by the maximum power produced by the engine. Alternatively, the maximum forward speed may be dictated by limitations on the controllability of the aerodynamic surfaces, for example a limit on the pitch control of the rotor disc. The maximum forward speed may be dictated by a maximum speed of the rotor blades. This is an aerodynamic limit of the rotor blades, for example the limit may be due to blade tip compressibility of the advancing rotor blade, or blade stalling of the retreating rotor blade.

There is a need for an improved autogyro plane.

Thus, according to the present invention, there is provided an autogyro plane according to claim 1.

According to another aspect there is provided a method of flying an autogyro plane including the steps of:
(a) powering a propeller with an engine to effect a take off,
(b) losing engine power,
(c) powering the propeller with an electric motor during decent to produce lift from the rotor blades.

According to another aspect there is provided a method of flying an autogyro plane comprising the steps of simultaneously powering the propeller and braking the rotor blades.

According to another aspect there is provided an autogyro plane including a retractable undercarriage having a retracted position in which the undercarriage is retracted into the fuselage.

The present invention will now be described, by way of example only, with reference to the accompanying drawings in which:-
Figure 1 is a side view of an autogyro plane according to the present invention with the undercarriage in a deployed position,
Figure 2 is a side view of the autogyro plane of figure 1 with the undercarriage in a retracted position,

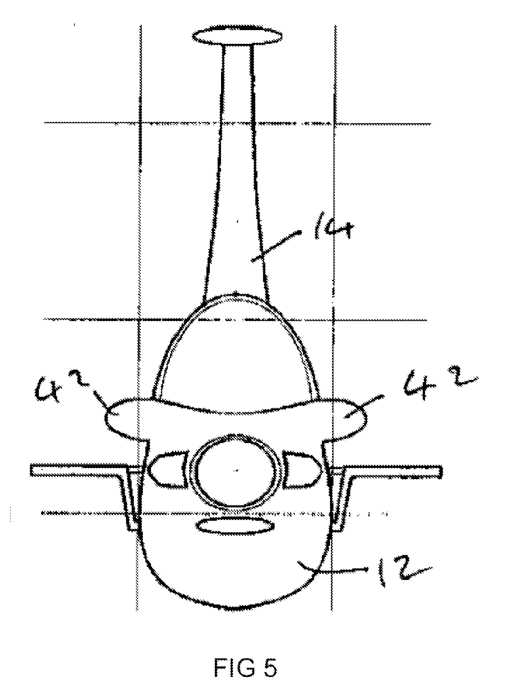

Figures 3, 4, 5 and 6 are bottom, top, front and rear views of the autogyro plane of figure 2,
Figure 7 is a side view of the autogyro of figure 2 showing internal detail, and
Figure 8 is a schematic diagram showing how certain components of the autogyro plane of figure 1 operate.

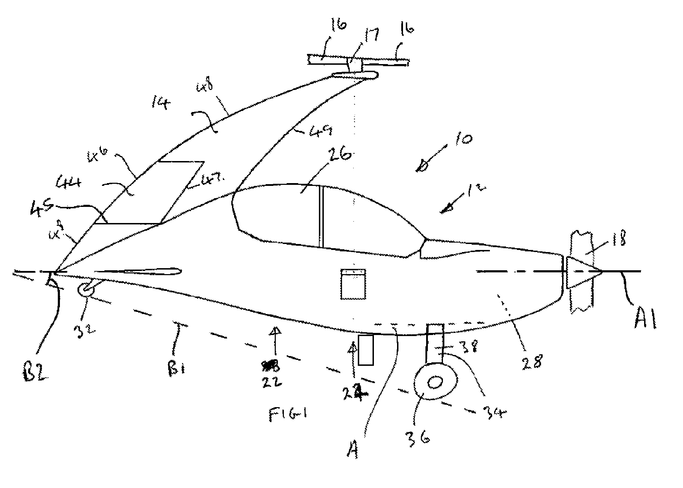

With reference to the figures there is shown an autogyro plane 10 having a fuselage 12, a mast 14, rotor blades 16 (only shown in figure 1 and only certain parts of which are shown) and a propeller 18 (only shown in figure 1 and only certain parts of which are shown).

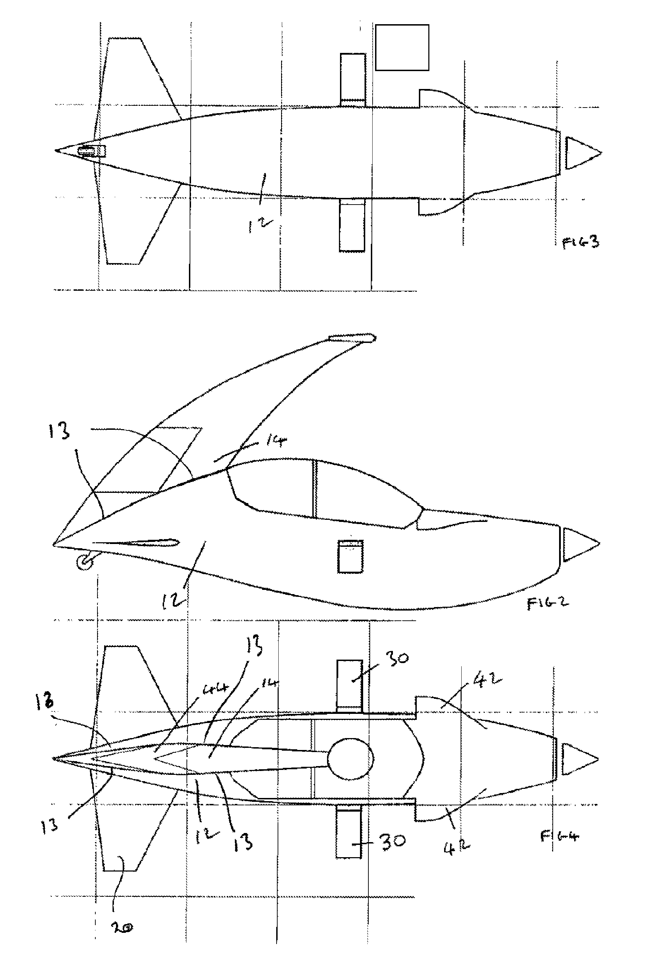

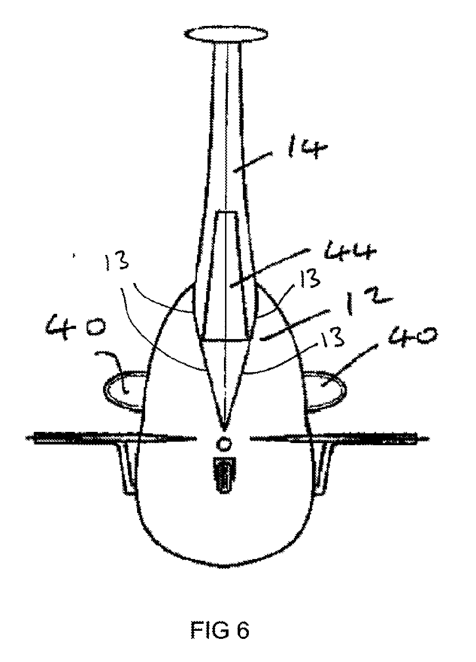

The mast is attached to the fuselage by a connection region 13 (see figures 2, 4 and 6).

The fuselage includes a tail plane 20 (also known as a horizontal stabilizer) at the rear.

The fuselage also includes a pilot position 22 and a load bay 24. A transparent cockpit cover 26 is shown in a closed position in figure 1 and covers the pilot position and load bay. In order to open the canopy it is slid forwards along rails (not shown). An engine 28 is mounted in the nose of the fuselage and drives the propeller 18.

In this case the load bay 24 includes a passenger seat in a tandem seating arrangement with the pilot seat, though in further embodiments the load bay could simply receive a load to be transported, or alternatively could include a fuel tank to extend the flying range of the autogyro plane.

Mounted on each side of the fuselage externally are load mounts 30. The load mounts enable a load to be carried externally. The externally mounted load could be fuel drop tanks, munitions, cameras or the like.

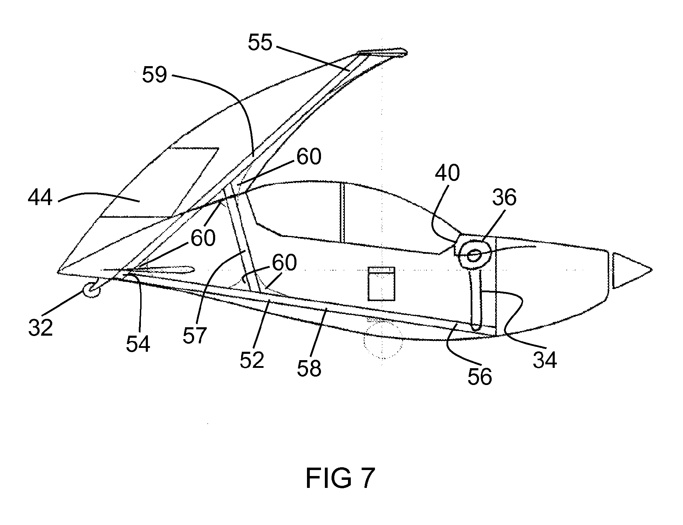

The fuselage includes a rear tail wheel 32 which is not retractable and a retractable undercarriage 34 having a pair of ground engaging wheels 36. As shown in figure 1 the undercarriage is in a deployed position and as shown in figure 7 the undercarriage is in a retracted position. Each wheel 36 is connected to a fuselage by an arm 38. The arm 38 is pivoted about axis A which is orientated in a fore and aft direction of the plane. As best seen in figure 7, when the undercarriage is in the retracted position the wheels 36 are positioned near the top of the fuselage and in front of rear view mirrors 40.

The arms 38 pivot through more than 100° between the deployed and retracted position. As will be appreciated from figure 1 and figure 7 by pivoting the undercarriage about axis A the centre of gravity of the wheels 36 and arms 38 stay substantially in the same plane when the undercarriage is retracted, deployed and between these positions. As such, little if any retrimming of the aircraft is required when deploying or retracting the undercarriage. When in the retracted position a part of the wheel projects from the generally smooth contour of the fuselage and a fairing 42 provides a smooth contour over the wheel and the rear view mirror.

The mast 14 is a single mast, and as best seen in figure 1 is inclined forwardly. It will also be appreciated that the mast is curved, and in particular is curved forwardly. The mast is cantilevered from its attachment point with the fuselage.

The mast 14 incorporates a rudder 44. When in the straight ahead position the trailing edge 46 of the rudder is contiguous with the trailing edge 48 of the mast. The leading edge 49 of the mast is in front of the leading edge 47 of the rudder. In particular the leading edge of the rudder is faired into the mast (see especially figure 4). In this manner drag is reduced since the air flow across the aircraft only impinges upon one leading edge, namely that of the mast, and does not impinge on the leading edge of the rudder. In this case the rudder is a single rudder. As best seen in figure 1 the lower edge 45 of the rudder is above the tail plane 20. The lower edge 45 is also above the axis of rotation A1 of the propeller 18. By putting the rudder above the tail plane allows the rear tail wheel 32 to be positioned close to the fuselage which results in a nose up attitude when the gyroplane is on the ground (as represented by line B1). As will be appreciated from figure 1, the difference in attitude between flying (where axis A1 is substantially horizontal) and when the autogyro is on the ground is represented by angle B2, which in this case is 15°. Advantageously, this will present the rotor blades naturally at 15° to the air flow direction when the autogyro is taking off into wind, (whilst the axis of rotation of the rotor blades is perpendicular to axis A1). As such, less pitch movement of the rotor blades relative to the fuselage is required during operation.

As mentioned above, when the autogyro is on the ground, the axis of rotation of the propeller 18 is angled at 15° to the ground. In further embodiments the axis of the propeller may be angled at more than 5° to the ground, alternatively it may be angled at more than 10° to the ground, alternatively it may be angled at 15° or more to the ground.

The rotor is mounted to the mast via rotor bearing 17.

The relative position, as shown in figure 1 of various components of the autogyro plane 10 is significant. Thus, as previously mentioned, the autogyro plane has a tractor propeller (as opposed to a pusher propeller). The tractor propeller and associated engine 28 are positioned at the front of the fuselage. The pilot position 22, i.e. the centre of gravity of the pilot, is behind the propeller and engine. However, the pilot position is in front of the attachment point between the mast and the fuselage. Nevertheless, by arranging to incline the mast forwardly, the rotor bearing 17 is positioned in front of the pilot position 22. The position of the rotor bearing equates to the centre of pressure of lift of the rotor blades. Thus, with the pilot's weight behind the centre of pressure of lift of the rotor blades this tends to counteract the weight of the engine and propeller, being in front of the centre of pressure of lift of the rotor blades, and this is in spite of the fact that the pilot is in front of the attachment point between the mast and the fuselage. This gives the pilot a forward view that is unobstructed by the mast. The pilot will sit in a seat with a relatively upright seat back and a substantially horizontal seat base. As will be appreciated the seat back (not shown) is also in front of the attachment point between the mast and fuselage. This allows the canopy above the pilots head to be unobstructed by the mast thereby giving the pilot a good upward view, in particular a good upward view of the rotor.

The arrangement also allows for a load bay to be positioned generally below the centre of pressure of the rotor blades. Thus, little or no trimming of the aircraft is required when a load is added to the load bay or removed from the load bay. When the load bay includes a fuel tank, little or no trimming of the aircraft is required as the fuel level in the fuel tank decreases. The externally positioned load mounts 30 are also below the centre of pressure of lift of the rotor blades and hence any externally applied loads will not significantly effect the trim requirements of the autogyro plane.

Figure 7 shows the internal "A-frame" load bearing structure (or air frame) of the autogyro plane. The air frame 52 is in the form of an upper case "A" laid on its side. The apex 54 is positioned near the rear tail wheel 32. The end 55 of one arm 59 of the "A" is positioned near the rotor bearing 17. The other end 56 of the other arm 58 of the "A" is positioned near the pivot of the undercarriage. The cross piece 57 of the "A" braces the two arms and is conveniently positioned behind the pilot position. Webs 60 strengthen the arms 58 and 59 and cross piece 57 locally where they are connected together. Note that arm 59 is in front of the rudder 44. The "A" nature of the air frame 52 conveniently connects the major load bearing points (rotor bearing 17, rear tail wheel 32 and retractable undercarriage 34), provides a forward leaning mast, and avoids encroaching on space required for other aspects of the aircraft (rudder 44) or pilot or load space (pilot position 22, load bay 24).

In further embodiments the air frame 52 could be replaced with alternative air frame designs, in particular the fuselage and mast skin could be made as a stressed skin to take the various loads.

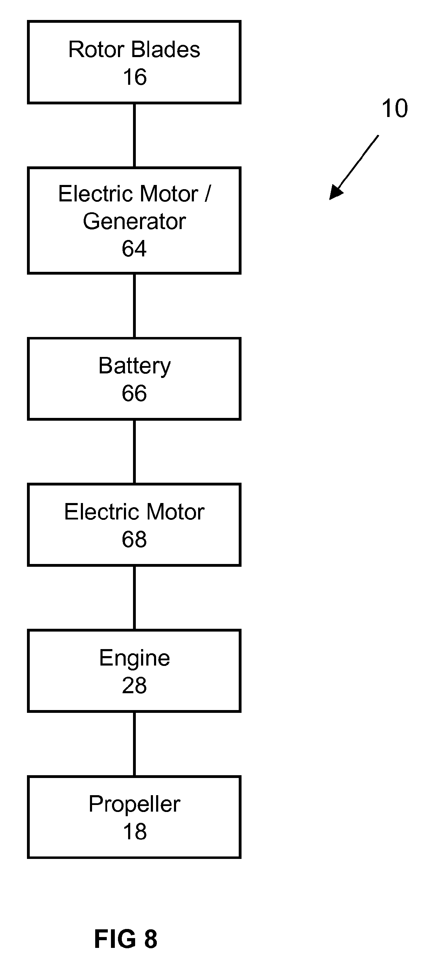

The present autogyro plane 10 includes an electric motor/generator 64 (as shown in figure 8). The autogyro plane 10 also includes an electrical energy storage device, in this case, a battery 66 and includes an electric motor 68.

The autogyro plane 10 can be operated in various ways as follows:-

### Takeoff

The battery 66 can supply current to the electric motor/generator 64 which, acting as an electric motor, can spin the rotor blades as a pre-rotator whilst the plane 10 is on the ground. The electric motor is then decoupled from the rotor blades and the engine 28 drives the propeller 18 to move the plane 10 along the ground until such time as the lift generated by the rotor blades lifts the plane off the ground. This mode of operation is equivalent to a conventional takeoff on known autogyro planes having mechanical or hydraulic pre-rotators.

### High Speed Flight

The present autogyro plane 10 is capable of a forward speed faster than the aerodynamic limit of the rotor blades when freely rotating. This is achieved by the electric motor/generator 64 acting as a generator and slowing the rotor blades. By deliberately slowing the rotor blades they will not reach their aerodynamic limit and the forwards speed of the autogyro plane 10 can be increased by increasing the pull of the tractor propeller e.g. by driving it faster and /or by changing the pitch of the propeller blades.

Clearly the energy created by the electric motor 64 acting in generator mode when braking the rotor blades must be absorbed, and in this case it is absorbed by recharging the battery 66. Once the battery 66 is fully charged, the energy can be absorbed by the electric motor 68 being coupled to the crank shaft of the engine, thereby assisting the engine to drive the propeller 18.

### Reduced Engine Power Requirement

As mentioned above, braking of the rotor blades via the electric motor/generator acting as a generator allows the autogyro plane to fly faster than the aerodynamic limit of the rotor blades. However, even when flying slower than the aerodynamic limit of the rotor blades it may be advantageous to brake the rotor blades.

Thus, by way of example the autogyro plane 10 may be flying at 170 Knots in still air with the rotor blades rotating freely (i.e. unbraked). If the electric motor/generator is used as a generator to brake the rotor blades, then the electricity generated by the electric motor/generator can be fed to battery 88 which in turn can feed the electric motor 68 which can supplement the power being produced by engine 28 to drive the propeller. This will allow the pilot to "throttle back" the engine power which, because it is supplemented by power from the electric motor 68 will enable the propeller 18 to generate the same thrust and maintain the aircraft speed at 170 Knots. Supplementing engine power with power derived from the rotor blades allows the engine to be run at a more efficient setting, thereby saving fuel.

### Engine Failure

Note also that in the event of failure or significant loss of power of engine 28, the electric motor 68 can be powered by the battery to drive the propeller. Depending upon the particular configuration, the electric motor 68 may provide sufficient power to assist in a controlled descent, alternatively the electric motor 68 may be able to provide sufficient power for horizontal flight through stationary air. In a further configuration the electric motor 68 may be able to provide sufficient power for the autogyro plane to climb. In either case the autogyro is safer.

In a further embodiment, during high speed flight when the electric motor/generator 64 acts to brake the rotor blades, the electric power produced could simply be fed directly to electric motor 68, thereby bypassing the battery 66.

In a further embodiment the rotor blades could be coupled via a transmission arrangement to the engine crank shaft. In this way the rotor blades could be braked and the energy transferred, via the transmission arrangement to the engine to assist in rotating the propeller. In one such arrangement the rotor blades could be connected to a drive shaft which lies parallel to arm 59, which in turn could be connected to a second drive shaft which lies parallel to cross piece 57, which in turn could be connected to a third drive shaft which lies generally parallel to arm 58 which could be coupled via gears or the like to the crankshaft of the engine to drive the propeller.

As described above, when the electric motor/generator 64 acts as a generator the power generated can either be fed to the battery 66 or can be fed directly to the electric motor 68. Alternatively, or additionally, the power generated could be used to feed ancillary electrical equipment of the autogyro plane 10.

The aspect of the undercarriage retracting into the fuselage with the wheels being positioned over the top of the fuselage, has been described in relation to the tractor gyro plane 10. In further embodiments these aspects of undercarriage retraction could be applied to pusher autogyro planes.

As described above, braking of the rotor to achieve a higher forward speed has been described in relation to the tractor autogyro plane 10, but in further embodiments this could be applied to a pusher autogyro plane.

In the embodiment described above the use of electrical energy storage devices, such as batteries for powering of the propeller, has been described in relation to the tractor autogyro plane 10, although in further embodiments this aspect could be applied to pusher autogyro planes. Furthermore, use of electrical energy storage devices for powering the propeller is independent of an electric motor/generator coupled to the rotor blades.

As described above, a battery 66 has been used as the means for storing electrical energy. In further embodiments alternative electrical energy storage devices, such as capacitors, could be used.

## Claims

1. An autogyro plane (10) having a fuselage (12) with a cockpit having a pilot position (22),
a tractor propeller (18) mounted at the front of the fuselage (12),
a mast (14) connected to the fuselage (12) at a connection region (13) and projecting upwardly from the fuselage (12) for supporting rotor blades (16),
the pilot position (22) being in front of the connection region (13), **characterised in that** said mast (14) incorporates a rudder (44).

2. An autogyro plane (10) as defined in claim 1 in which the mast (14) is inclined forwardly and/or the mast is a single mast.

3. An autogyro plane (10) as defined in any preceding claim in which with the rudder (44) in a straight ahead position the trailing edge (46) of the rudder (44) is contiguous with a trailing edge (48) of the mast (14).

4. An autogyro plane (10) as defined in claim 3 in which a leading edge (47) of the rudder (44) is behind a leading edge (49) of the mast (14), preferably the leading edge of the rudder is faired into the mast.

5. An autogyro plane (10) as defined in any preceding claim in which the rotor blades (16) are rotatably supported via a rotor bearing (17) and the rotor bearing (17) is positioned in front of the pilot position (22).

6. An autogyro plane (10) as defined in any preceding claim in which the fuselage (12) includes a load bay (24) in front of the pilot, preferably the load bay includes a passenger seat.

7. An autogyro plane (10) as defined in any preceding claim in which the fuselage (12) includes an external load mount (30) positioned in front of the pilot position (22).

8. An autogyro plane (10) as defined in any preceding claim in which the fuselage (12) includes a cockpit canopy, preferably in which the cockpit canopy (26) slides forward to open.

9. An autogyro plane (10) as defined in any preceding claim including an electric motor (64) for driving the rotor blades (14), preferably including an electrical energy storage device such as a battery (66) or a capacitor for powering the electric motor (64).

## Patentansprüche

1. Tragschrauber (10), welcher aufweist:
einen Flugzeugrumpf (12) mit einem Cockpit, das eine Pilotenposition (22) aufweist,
einen Antriebspropeller (18), welcher an der Vorderseite des Flugzeugrumpfes (12) angebracht ist,
einen Mast (14), der mit dem Flugzeugrumpf (12) an einem Verbindungsbereich (13) verbunden ist und der nach oben von dem Flugzeugrumpf (12) hervorsteht, um Rotorblätter (16) zu lagern,
wobei die Pilotenposition (22) sich vor dem Verbindungsbereich (13) befindet, **dadurch gekennzeichnet, dass** der Mast (14) ein Ruder (44) trägt.

2. Tragschrauber (10) nach Anspruch 1, bei dem der Mast (14) nach vorne geneigt ist und / oder der Mast ein einzelner Mast ist.

3. Tragschrauber (10) nach einem der vorhergehenden Ansprüche, bei dem das Ruder (44) in einer Geradeausstellung einer Rückflanke (46) des Ruders (44) angrenzend an eine Rückflanke (48) des Mastes (14) ist.

4. Tragschrauber (10) nach Anspruch 3, bei dem eine Vorderflanke (47) des Ruders (44) hinter einer Vorderflanke (49) des Mastes (14) ist, vorzugsweise bei dem die Vorderflanke des Ruders windschlüpfig mit dem Mast ist.

5. Tragschrauber (10) nach einem der vorhergehenden Ansprüche, bei dem die Rotorblätter (16) drehbar über ein Rotorlager (17) gelagert sind und bei dem das Rotorlager (17) vor der Pilotenposition (22) angeordnet ist.

6. Tragschrauber (10) nach einem der vorhergehenden Ansprüche, bei dem der Flugzeugrumpf (12) eine Ladebucht (24) vor dem Piloten aufweist, vorzugsweise bei dem die Ladebucht (24) einen Fahrgastsitz aufweist.

7. Tragschrauber (10) nach einem der vorhergehenden Ansprüche, bei dem der Flugzeugrumpf (12) einen externen Ladeträger (30) aufweist, der vor der Pilotenposition (22) angeordnet ist.

8. Tragschrauber (10) nach einem der vorhergehenden Ansprüche, bei dem der Flugzeugrumpf (12) eine Haube des Cockpits aufweist, vorzugsweise bei dem die Haube des Cockpits zum Öffnen nach vorne gleitet.

9. Tragschrauber (10) nach einem der vorhergehenden Ansprüche, welcher einen elektrischen Motor (64) zum Antreiben der Rotorblätter (14) aufweist, vorzugsweise welcher eine elektrische Speichervorrichtung wie zum Beispiel eine Batterie (66) oder einen Kondensator aufweist, um den elektrischen Motor mit Energie zu versorgen.

## Revendications

1. Autogire (10) ayant un fuselage (12) avec un cockpit ayant un poste pilote (22),
une hélice tractrice (18) montée à l'avant du fuselage (12),
un mât (14) connecté au fuselage (12) dans une région de connexion (13) et se projetant vers le haut depuis le fuselage (12) pour supporter les pales du rotor (16),
le poste pilote (22) étant à l'avant de la région de connexion (13), **caractérisé en ce que** ledit mât (14) incorpore un gouvernail (44).

2. Autogire (10) selon la revendication 1 dans lequel le mât (14) est incliné vers l'avant et/ou le mât est un mât unique.

3. Autogire (10) selon l'une quelconque des revendications précédentes dans lequel lorsque le gouvernail (44) est dans une position droite, le bord de fuite (46) du gouvernail (44) est contigüe avec un bord de fuite (48) du mât (14).

4. Autogire (10) selon la revendication 3 dans lequel un bord d'attaque (47) du gouvernail (44) est derrière un bord d'attaque (49) du mât (14), et de préférence le bord d'attaque du gouvernail est caréné dans le mât.

5. Autogire (10) selon l'une quelconque des revendications précédentes dans lequel les pales de rotor (16) sont supportées en rotation via un palier de rotor (17) et le palier de rotor (17) est positionné devant le poste pilote (22).

6. Autogire (10) selon l'une quelconque des revendications précédentes dans lequel le fuselage (12) inclut une baie de chargement (24) devant le pilote, et de préférence la baie de chargement inclut un siège passager.

7. Autogire (10) selon l'une quelconque des revendications précédentes dans lequel le fuselage (12) inclut un support de charge externe (30) positionné devant le poste pilote (22).

8. Autogire (10) selon l'une quelconque des revendications précédentes dans lequel le fuselage (12) inclut une verrière de cockpit, de préférence dans lequel la verrière de cockpit (26) coulisse vers l'avant pour s'ouvrir.

9. Autogire (10) selon l'une quelconque des revendications précédentes incluant un moteur électrique (64) pour entraîner les pales du rotor (14), de préférence incluant un dispositif de stockage de l'énergie électrique tel qu'une batterie (66) ou un condensateur pour alimenter le moteur électrique (64).
